# EUROPEAN PATENT APPLICATION

(11) **EP 2 083 047 A1**
(43) Date of publication of application: **29.07.2009**
(21) Application number: 08001362.6
(22) Date of filing: 24.01.2008
(51) Int. Cl.: C08L 23/10, C08L 23/08, C08L 51/06

(54) **Partially cross-linked polypropylene composition comprising an acidic silanol condensation catalyst**

(71) Applicant: Borealis Technology OY, 06101 Porvoo (FI)
(72) Inventor: Gahleitner, Markus, 4501 Neuhofen/Krems (AT); Pham, Tung, 4040 Linz (AT); Wolfschwenger, Johannes, 4491 Niedemeukirchen (AT)
(74) Representative: Kador & Partner

(57) **Abstract**

The present invention relates to a heterophasic polypropylene composition comprising
- a polypropylene homo- or copolymer (A) as matrix phase,
- a polyolefin (B) comprising hydrolysable silane groups dispersed in the matrix phase, and
- an acidic silanol condensation catalyst (C),

wherein the polypropylene homo- or copolymer (A) further comprises a particulate acid scavenger, a method for the preparation thereof, and its use in different applications.

## Description

The present invention relates to a polypropylene composition with a dispersed phase selectively cross-linked by an acidic silanol condensation catalyst, a method for the production thereof, and its use in different applications such as moulding applications, films, wires and cables or pipes.

Due to their chemical and thermal resistance as well as mechanical strength polypropylenes are used in different applications such as moulding applications, films, wires and cables or pipes.

It is known that cross-linking of a composition based on polypropylene improves the mechanical strength and chemical heat resistance of the composition. EP 1 354 901 provides a cross-linked heterophasic polypropylene composition with an improved impact strength. The cross-linking reaction is carried out by using an organic peroxide.

However, conventional cross-linking mechanisms for heterophasic polypropylenes based on radical reactions are not selective to any of the components of the polyolefin and result necessarily in a degradative damage of the heterophasic polypropylene components, limiting the final mechanical performance, especially the toughness, of the material.

It is also a well known process to produce cross-linked polyolefins using a vinyl silane onto an olefin homo- or copolymer such as described in US 3,646,155. Alternatively, the vinyl silane may be copolymerised directly with olefin monomers as described in US 4,413,066. However, these methods require a free-radical generator to initiate the grafting reaction and thus polypropylene is also unsuited to this method of cross-linking.

US 6,455,637 describes a heterophasic polypropylene composition, which is suitable for cross-linking reaction and wherein a silane-groups containing polyolefin is blended with a polypropylene. However, the described cross-linking reaction must be carried out under a humidity of 90 to 100 % and at temperature of 85 °C. These reaction conditions negatively influence the molecular structure of the polypropylene composition and thus the good mechanical properties of the composition and will accelerate physical and chemical ageing including post-crystallisation. It is well known for these processes to limit the toughness of materials.

Further, those compositions are typically cross-linked by silanol condensation catalysts like peroxides or organic metal compounds which are potentially harmful to health and environment.

In WO 95/17463 a new class of acidic silanol condensation catalysts is introduced that allow cross-linking to quickly take place already at room temperature and are environmentally friendly.

However, the catalytic activity of those acidic silanol condensation catalysts is significantly impaired by acid scavengers like calcium stearate which are typically added to polypropylene after polymerisation for neutralizing acid residues derived from the polymerisation catalyst which will lower the corrosivity of the resulting polymer composition.

Considering the above disadvantages it is object of the present invention to provide a polypropylene composition which is cross-linkable to a high degree under mild conditions by using an environmentally friendly acidic silanol condensation catalyst.

The present invention is based on the finding that the above object can be achieved if polypropylene is polymerised in presence of a particular acid scavenger that is non-soluble in the polypropylene composition and is not melting in the processing temperature range. A heterophasic polypropylene composition comprising such a polypropylene can thus be selectively cross-linked to a high degree by an acidic silanol condensation catalyst at room temperature and normal humidity.

Therefore, the present invention relates to a heterophasic polypropylene composition comprising
- a polypropylene homo- or copolymer (A) as matrix phase,
- a polyolefin (B) comprising hydrolysable silane groups dispersed in the matrix phase, and
- an acidic silanol condensation catalyst (C),
wherein the polypropylene homo- or copolymer (A) further comprises a particulate acid scavenger.

The particulate acid scavenger is non-soluble in the heterophasic polypropylene melt and therefore does not migrate into the dispersed phase. Thus, the selective cross-linking reaction of polyolefin (B) catalysed by acidic silanol condensation catalyst (C) is not impaired resulting in a high cross-linking degree.

The term "polypropylene" denotes a propylene homo- or copolymer or a mixture of such propylene homo- or copolymers. The term "polyethylene" denotes an ethylene homo- or copolymer or a mixture of such ethylene homo- or copolymers. The term "particulate acid scavenger" denotes an acid scavenger that is non-soluble in a polymer and not melting in the processing temperature range.

In the present invention propylene homo- or copolymer (A) is preferably used in an amount of 50 to 99 wt%, more preferably of 55 to 95 wt%, still more preferably in an amount of 60 to 90 wt%, and most preferably of 65 to 85 wt% based on the total heterophasic polypropylene composition.

The propylene homo- or copolymer (A) may be produced by single- or multistage process polymerisation of propylene or propylene and alphaolefin and/or ethylene such as bulk polymerisation, gas phase polymerisation, slurry polymerisation, solution polymerisation or combinations thereof using conventional catalysts. A homo- or copolymer can be made either in loop reactors or in a combination of loop and gas phase reactors. Those processes are well known to one skilled in the art.

A suitable catalyst for the polymerisation of the propylene polymer is any stereospecific catalyst for propylene polymerisation which is capable of polymerising and copolymerising propylene and comonomers at a temperature of 40 to 110 °C and at a pressure from 10 to 100 bar. Ziegler Natta catalysts as well as metallocene catalysts are suitable catalysts.

The polypropylene homo- or copolymer (A) further comprises a particulate acid scavenger, preferably a mineral acidic scavenger, which is added after polymerisation preferably in an amount of 0.001 to 1.0 wt%, more preferably 0.003 to 0.5 wt%, still more preferably 0.005 to 0.3 wt%, most preferably 0.01 to 0.1 wt%, based on the total polypropylene homo-or copolymer (A), in order to neutralize acid residues derived from the polymerisation catalyst which will lower the corrosivity of the resulting polypropylene composition.

Further, it is preferred that the particulate acid scavenger is not melting in the processing temperature range, that means that the particulate acid scavenger preferably has a melting point of above 230°C, more preferably above 250°C, still more preferably above 300°C, most preferably above 500°C.

Still further, it is preferred that the particulate acid scavenger is non-soluble in the melt of the heterophasic polypropylene composition.

In a preferred enbodiment, the particulate acid scavenger is selected from a group consisting of precipitated calcium carbonate, magnesium oxide, and synthetic hydrotalcites.

The polyolefin (B) of the inventive heterophasic polypropylene composition is preferably used in an amount of 1 to 50 wt%, more preferably in an amount of 5 to 40 wt%, still more preferably in an amount of 10 to 40 wt% and most preferably in an amount of 15 to 35 wt%, based on the total heterophasic polypropylene composition.

Furthermore, polyolefin (B) is dispersed in the matrix phase (A) and comprises hydrolysable silane-groups.

The hydrolysable silane-groups can be introduced e.g. by grafting the silane compound into the polyolefin or by copolymerisation of the olefin monomers and silane-groups containing monomers. Such techniques are known e.g. from US 4,413,066, US 4,297,310, US 4,351,876, US 4,397,981, US 4,446,283 and US 4,456,704.

In the case the silane-group containing polyolefin (B) has been obtained by copolymerisation, the copolymerisation is preferably carried out with an unsaturated silane compound represented by the formula

R¹SiR²_{q}Y_{3-q} (I)

wherein

R¹ is an ethylenically unsaturated hydrocarbyl, hydrocarbyloxy or (meth)acryloxy hydrocarbyl group,

R² is an aliphatic saturated hydrocarbyl group,

Y which may be the same or different, is a hydrolysable organic group and
q is 0, 1 or 2.

Special examples of the unsaturated silane compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group.

A preferred unsaturated silane compound is represented by the formula

CH₂=CHSi(OA)₃ (II)

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, and vinyl triacetoxysilane.

The copolymerisation of the olefin and the unsaturated silane compound may be carried out under any suitable conditions resulting in the copolymerisation of the two monomers.

Moreover, the copolymerisation may be implemented in the presence of one or more other comonomers which can be copolymerised with the two monomers. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)-acrylate, (d) olefinically unsaturated carboxylic acids, such as (meth)-acrylic acid, maleic acid and fumaric acid, (e) (meth)acrylic acid derivativs, such as (meth)acrylonitrile and (meth)acrylic amide, (f) vinyl ethers, such as vinyl methyl ether and vinyl phenyl ether, and (g) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)-acrylate, are preferred.

Especially preferred comonomers are butyl acrylate, ethyl acrylate and methyl acrylate.

Two or more such olefinically unsaturated compounds may be used in combination. The term "(meth)acrylic acid" is intended to embrace both acrylic acid and methacrylic acid. The comonomer content of the copolymer may amount to 70 wt% of the copolymer, preferably about 0.5 to 35 wt%, most preferably about 1 to 30 wt%.

The grafted polyolefin (B) may be produced e.g. by any of the two methods described in US 3,646,155 and US 4,117,195, respectively.

The silane-groups containing polyolefin (B) according to the invention preferably comprises 0.1 to about 10 wt% of the silane compound, more preferably 0.5 to 7 wt%, most preferably 1.0 to 4 wt% by weight, based on the total polyolefin (B).

The silanol content can be adjusted by blending the grafted or copolymerised polyolefin with a non-modified polyolefin.

If the silane-groups are introduced in the polyolefin (B) by polymerisation, as described above, it is preferred that the silane-group containing polyolefin (B) has a density of 900 to 940 kg/m³, more preferred of 910 to 935 kg/m³, most preferred of 915 to 930 kg/m³.

Furthermore, it is preferred that the silane-grafted polyolefin (B) has a density of 900 to 960 kg/m³, more preferred of 920 to 955 kg/m³, most preferred of 930 to 950 kg/m³.

Moreover, the used polyolefin (B) of the invention preferably is an ethylene homo- or copolymer, as a high density polyethylene, low density polyethylene, linear low density polyethylene or their like.

The cross-linking reaction is carried out by an acidic silanol condensation catalyst (C). It is preferred that the silanol condensation catalyst (C) is typically selected from the group comprising Lewis acids, inorganic acids such as sulphuric acid and hydrochloric acid, and organic acids such as citric acid, stearic acid, acetic acid, sulfonic acid and alkanoic acids as dodecanoic acid, organic bases, and carboxylic acids.

Preferably the acidic silanol condensation catalyst (C) comprises a sulfonic acid, more preferably an organic sulfonic acid comprising 10 C-atoms or more the organic sulfonic acid further comprising an aromatic group.

Further preferred, the aromatic organic sulfonic acid comprises the structural element:

Ar(SO₃H)ₓ (III)

with Ar being an aryl group which may be substituted or non-substituted, and x being at least 1.

The organic aromatic sulfonic acid silanol condensation catalyst may comprise the structural unit according to formula (III) one or several times, e.g. two or three times. For example, two structural units according to formula (III) may be linked to each other via a bridging group such as an alkylene group.

Preferably, Ar is a aryl group which is substituted with at least one C₄- to C₃₀-hydrocarbyl group, more preferably C₄- to C₃₀-alkyl group.

Aryl group Ar preferably is a phenyl group, a naphthalene group or an aromatic group comprising three fused rings such as phenantrene and anthracene.
Preferably, in formula (III) x is 1, 2 or 3, and more preferably x is 1 or 2.

Furthermore, preferably the compound used as organic aromatic sulfonic acid silanol condensation catalyst has from 10 to 200 C-atoms, more preferably from 14 to 100 C-atoms.

In one preferred embodiment, Ar is a hydrocarbyl substituted aryl group and the total compound containing 14 to 28 carbon atoms, and still further preferred, the Ar group is a hydrocarbyl substituted benzene or naphthalene ring, the hydrocarbyl radical or radicals containing 8 to 20 carbon atoms in the benzene case and 4 to 18 atoms in the naphthalene case.

It is further preferred that the hydrocarbyl radical is an alkyl substituent having 10 to 18 carbon atoms and still more preferred that the alkyl substituent contains 12 carbon atoms and is selected from dodecyl and tetrapropyl. Due to commercial availability it is most preferred that the aryl group is a benzene substituted group with an alkyl substituent containing 12 carbon atoms.

The currently most preferred compounds are dodecyl benzene sulfonic acid and tetrapropyl benzene sulfonic acid.

The silanol condensation catalyst may also be precursor of the sulfonic acid compound, including all its preferred embodiments mentioned, i.e. a compound that is converted by hydrolysis to such a compound. Such a precursor is for example the acid anhydride of a sulfonic acid compound, or a sulfonic acid that has been provided with a hydrolysable protective group, as e.g. an acetyl group, which can be removed by hydrolysis.

In a second preferred embodiment, the sulfonic acid catalyst is selected from those as described in EP 1 309 631 and EP 1 309 632, namely
a) a compound selected from the group of
   (i) an alkylated naphthalene monosulfonic acid substituted with 1 to 4 alkyl groups wherein each alkyl group is a linear or branched alkyl with 5 to 40 carbons with each alkyl group being the same or different and
      wherein the total number of carbons in the alkyl groups is in the range of 20 to 80 carbons;
   (ii) an arylalkyl sulfonic acid wherein the aryl is phenyl or naphthyl and is substituted with 1 to 4 alkyl groups wherein each alkyl group is a linear or branched alkyl with 5 to 40 carbons with each alkyl group being the same or different and wherein the total number of carbons in the alkyl groups is in the range of 12 to 80;
   (iii) a derivative of (i) or (ii) selected from the group consisting of an anhydride, an ester, an acetylate, an epoxy blocked ester and an amine salt thereof which is hydrolysable to the corresponding alkyl naphthalene monosulfonic acid or the arylalkyl sulfonic acid;
   (iv) a metal salt of (i) or (ii) wherein the metal ion is selected from the group consisting of copper, aluminium, tin and zinc; and
b) a compound selected from the group of
   (i) an alkylated aryl disulfonic acid selected from the group consisting of the structure (IV): 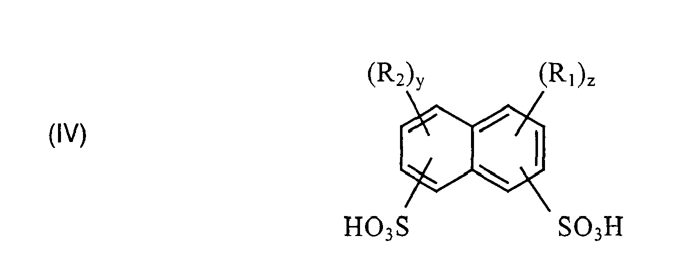 and the structure (V): 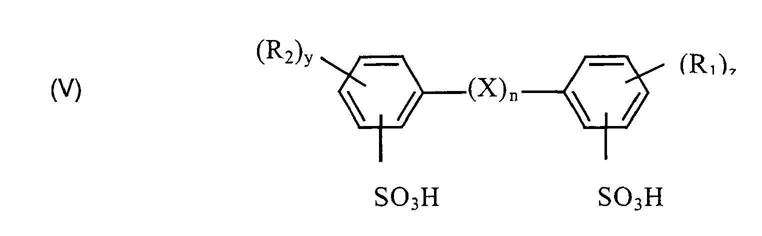 wherein each of R₁ and R₂ is the same or different and is a linear or branched alkyl group with 6 to 16 carbons, y is 0 to 3, z is 0 to 3 with the proviso that y + z is 1 to 4, n is 0 to 3, X is a divalent moiety selected from the group consisting of -C(R₃)(R₄)-, wherein each of R₃ and R₄ is H or independently a linear or branched alkyl group of 1 to 4 carbons and n is 1; -C(=O)-, wherein n is 1; -S-, wherein n is 1 to 3 and -S(O)₂-,
      wherein n is 1; and
   (ii) a derivative of (i) selected from the group consisting of the anhydrides, esters, epoxy blocked sulfonic acid esters, acetylates, and amine salts thereof which is a hydrolysable to the alkylated aryl disulfonic acid, together with all preferred embodiments of those sulfonic acids as described in the mentioned European Patents.
      Furthermore, it is preferred that the silanol condensation catalyst is preferably present in an amount of 0.0001 to 6 wt%, more preferably of 0.001 to 2 wt%, and most preferably 0.05 to 1 wt%, based on the total composition.

Further, the inventive heterophasic polypropylene composition may contain further additives, such as antioxidants.

As antioxidant preferably a compound or a mixture of such compounds is used which is neutral or acidic and must comprise a sterically hindered phenol group or aliphatic sulphur groups. Such compounds are disclosed in EP 1 254 923 to be particularly suitable antioxidants for stabilisation of polyolefins containing hydrolysable silane groups which are cross-linked with a silanol condensation catalyst, in particular an acidic silanol condensation catalyst. Other preferred antioxidants are disclosed in WO 2005/003199 A1.

Preferably, the antioxidant is present in the composition in an amount of from 0.01 to 3 wt.%, more preferably 0.05 to 2 wt.%, and most preferably 0.08 to 1.5 wt.%.

Moreover, the heterophasic polypropylene composition according to the invention may contain various further additives, such as miscible thermoplastics, further stabilizers, lubricants, fillers, colouring agents and foaming agents, which can be added before during or after the blending step (ii) to the composition.

In a preferred embodiment, the heterophasic polyproplyene further comprises an inorganic mineral filler.

The present invention further relates to a method for producing a heterophasic polypropylene composition according to the invention
wherein the process comprises the following steps:
i. polymerising a polypropylene homo- or copolymer (A) and afterwards adding a particulate acid scavenger,
ii. blending (A) and (B), which comprises hydrolysable silane groups together with the silanol condensation catalyst (C),
iii. pelletizing of the blend of step (ii) in a water bath, and afterwards
iv. cross-linking the heterophasic polypropylene composition at 10 to 40°C under a humidity of below 85 % to a cross-linking degree of at least 30 %, based on the total polyolefin (B).

The propylene homo- or copolymer (A) may be produced by single- or multistage process polymerisation of propylene or propylene and alphaolefin and/or ethylene such as bulk polymerisation, gas phase polymerisation, slurry polymerisation, solution polymerisation or combinations thereof using conventional catalysts. A homo- or copolymer can be made either in loop reactors or in a combination of loop and gas phase reactors. Those processes are well known to one skilled in the art.

A suitable catalyst for the polymerisation of the propylene polymer is any stereospecific catalyst for propylene polymerisation which is capable of polymerising and copolymerising propylene and comonomers at a temperature of 40 to 110 °C and at a pressure from 10 to 100 bar. Ziegler Natta catalysts as well as metallocene catalysts are suitable catalysts.

The particulate acid scavenger is added in step (i) preferably together with antioxidants.

In the present invention the compounds (A) and (B) are blended together with the acidic silanol condensation catalyst (C). It is preferred that the acidic silanol condensation catalyst (C) and compound (A) are preferably added to the silane group containing polyolefin (B) by compounding a master batch, which contains the acidic silanol condensation catalyst (C) and the propylene homo- or copolymer (A) in a polymer matrix in concentrated form, with the silane -group containing polyolefin (B).

Alternately the final composition can also be produced by blending a higher concentration than the final target concentration of (B) together with (A) and the acidic silanol condensation catalyst (C), the resulting composition being further diluted with (A) to the target concentration of (B).

Furthermore, the blending step of the present invention can be carried out by any suitable method known in the art, but preferably in a twin screw extruder with two high intensity mixing segments and preferably at a temperature of 180 to 230 °C, more preferably of 185 to 225 °C, and at a throughput of 10 to 15 kg/h and a screw speed of 50 to 70 rpm.

After the compounds are blended, as described above, the melt blend is cooled in a water bath, whereby the residence time preferably is less than 120 seconds, more preferably less than 60 seconds, to solidify the blend before pelletizing. Alternately the pelletizing can be carried out directly in the water bath, in which case the residence time of the pellets in the water before separation and drying preferably is less than 240 seconds, more preferably less than 120 seconds. Optionally, the resulted compound may be stored at ambient temperature of 5 to 50 °C, preferably 10 to 40 °C, and normal humidity.

Normal humidity means in this connection a humidity of 40-85 % relative.

In the present invention after the pelletizing of the blend, the selective cross-linking reaction follows at temperature of 5 to 50 °C, more preferably of 10 to 40 °C and a humidity below 85 %, more preferably below 75 %.

The cross-linking degree is determined via the xylene hot insolubles fraction of the heterophasic polypropylene composition, and is more than 30 %, more preferably more than 40 %, of the total content of the polyolefin (B).

It will be shown in the example section below that the cross-linked polypropylene compositions according to the present invention show improved mechanical properties such as Charpy notched impact strength, accompanied by good properties for flexural modulus.

Thus, the inventive polypropylene compositions preferably have a Charpy notched impact strength at +23°C of at least 7.0 kJ/m², more preferably at least 7.5 kJ/m², most preferably at least 8.0 kJ/m² in a Charpy notched impact strength test, determined according to ISO 179 1 eA.

Moreover, the polypropylene compositions according to the invention have a flexural modulus of at least 850 MPa, more preferably at least 875 MPa, most preferably at least 900 MPa, determined according to ISO 178.

The heterophasic polypropylene composition can be used in different applications, like moulding applications, films, fibre, wires and cables or pipes.

Further the present invention relates to an article made of the heterophasic polypropylene composition.

### Examples:

1. Definitions
   a) Melt Flow Rate
      The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR₂ of polypropylene is determined at a temperature of 230 °C and a load of 2.16 kg, the MFR₅ of polyethylene is measured at a temperature 190 °C and a load of 5 kg and the MFR₂ of polyethylene at a temperature 190 °C and a load of 2.16 kg.
   b) Xylene insolubles
      The content of xylene hot insolubles is determined by extracting 1 g of finely cut polymer sample with 500 ml xylene in a Soxleth extractor for 48 hours at the boiling temperature. The remaining solid amount is dried at 90 °C and weighed for determining the insolubles amount.
      The cross-linking degree of the polyethylene component (B) is calculated by normalizing the weight percentage of xylene hot insolubles to the weight percentage of component (B).
   c) Density
      Density of the polymer was measured according to ISO 1183/D on compression-moulded specimens.
   d) Mechanical properties
      All mechanical properties were determined on injection moulded specimens of 80x10x4 mm³ prepared in accordance with EN ISO 1873-2.
   e) Flexural Modulus
      This modulus was determined in a flexural test according to ISO 178 at +23°C.
   f) Charpy notched impact strength
      The Charpy notched impact strength was determined according to ISO 179 1eA at +23°C (V-notch, base radius 0,5mm).
2. Examples
   The components - propylene homo- or copolymer, polyethylene-vinylsilane-copolymer or grafting product and the catalyst master batch (Borealis polyethylene Ambicat-MB60 with dodecyl benzene sulphonic acid as catalytically active substance or Borealis polyethylene CAT-MB40 with dibutyl-tin-dilaurate as catalytically active substance), were combined in a twin screw extruder (PRISM TSE24, L/D ratio 40) with two high intensity mixing segments at temperatures between 190 and 220°C at a through put of 10 kg/h and a cruse speed of 50 rpm. The material was extruded to two circular dies of 3 mm diameter into water bath with a residence time of at least 30 sec for solidifying the melt standard, which was consequently pelletized. For the period until melt processing, the resulting compound was stored at an ambient temperature of + 23 ± 2 °C and normal humidity (50 ± 5%).

### Compounds:

All used polymer components are commercially available from Borealis Polyolefine GmbH, Austria:
- HD204CF is a propylene homopolymer for film extrusion, free of slip and antiblock agents and without calcium stearate, comprising 150 ppm magnesium oxide (Magnesiumoxid leicht, Hans Werba GmbH, Austria) as particulate acid scavenger as well as a conventional combination of antioxidants, with MFR (230°C/2.16 kg) of 8 g/10 min and a density of 905 kg/m³. The flexural modulus (ISO 178) of this polymer is 1380 MPa.
- HD234CF is a propylene homopolymer for film extrusion, containing slip and antiblock agents, comprising 500 ppm calcium stearate as well as a conventional combination of antioxidants, with MFR (230°C/2.16 kg) of 8 g/10 min and a density of 905 kg/m³. The flexural modulus (ISO 178) of this polymer is 1400 MPa.
- HC001 is a polypropylene homopolymer for general purpose injection moulding, free of slip and antiblock agents and without calcium stearate, comprising 500 ppm precipitated calcium carbonate (Socal U1S1, distributed by Solvay Chemicals) as particulate acid scavenger, with MFR (230°C/2.16 kg) of 2 g/10 min and a density of 905 kg/m³. The flexural modulus (ISO 178) of this polymer is 1450 MPa.
- Visico LE4481 is a high-pressure low density ethylene copolymer with vinyl silane content for cable insulation with MFR (190°C/2.16 kg) of 5 g / 10 min , a silanol content of 1.75 wt% and a density of 927 kg/m³.

### Example 1 (Ex1):

75 wt% HC001 as matrix phase, 22.5 wt% LE4481 as silane-copolymerized polyethylene and 2.5 wt% catalyst masterbatch Ambicat-MB60 are used.

### Example 2 (Ex2):

75 wt% HD204CF as matrix phase, 22.5 wt% LE4481 as silane-copolymerized polyethylene and 2.5 wt% catalyst masterbatch Ambicat-MB60 are used.

### Comparative Example 1 (CE1):

75 wt% HC001 as matrix phase, 22.5 wt% LE4481 as silane-copolymerized polyethylene and 2.5 wt% catalyst masterbatch CAT-MB40 are used.

### Comparative Example 2 (CE2):

75 wt% HD204CF as matrix phase, 22.5 wt% LE4481 as silane-copolymerized polyethylene and 2.5 wt% catalyst masterbatch CAT-MB40 are used.

### Comparative Example 3 (CE3):

75 wt% HD234CF as matrix phase, 22.5 wt% LE4481 as silane-copolymerized polyethylene and 2.5 wt% catalyst masterbatch Ambicat-MB60 are used.

### Comparative Example 4 (CE4):

75 wt% HD234CF as matrix phase, 22.5 wt% LE4481 as silane-copolymerized polyethylene and 2.5 wt% catalyst masterbatch CAT-MB40 are used.

As the results in table 1 show, the polymer compositions comprising polypropylenes and particulate acid scavengers have comparable cross-linking degrees when cross-linked by means of an acid silanol condensation catalyst or a tin containing silanol condensation catalyst.

Further, the modulus of the compounds is reduced in all cases by approximately one third irrespective of the achieved cross-linking degree. The impact strength, however, only increases significantly if the polyethylene component (B) is at least partially cross-linked.

**Table 1 - Composition and mechanical properties of examples and comparative examples**

| Examples | PP | Acid Scavenger | | Catalyst | Xylene insoluble | Cross-linking degree | Flex. Modulus ISO 178 +23°C | Charpy ISO 179 1eA +23°C |
|---|---|---|---|---|---|---|---|---|
| | Type | Type | Content [ppm] | Type | [wt%] | [%] | [MPa] | [kJ/m²] |
| CE1 | HC001 | CaCO₃ | 500 | MB40 | 10.3 | 41.0 | 1020 | 8.9 |
| Ex1 | HC001 | CaCO₃ | 500 | MB60 | 12.4 | 49.8 | 980 | 11.8 |
| CE2 | HD204CF | MgO | 150 | MB40 | 14.5 | 58.0 | 950 | 8.3 |
| Ex2 | HD204CF | MgO | 150 | MB60 | 13.1 | 52.3 | 940 | 8.4 |
| CE4 | HD234CF | Ca- stearate | 500 | MB40 | 10.3 | 41.2 | 880 | 9.2 |
| CE3 | HD234CF | Ca-stearate | 500 | MB60 | 0.8 | 3.4 | 890 | 4.3 |

## Claims

1. A heterophasic polypropylene composition comprising
- a polypropylene homo- or copolymer (A) as matrix phase,
- a polyolefin (B) comprising hydrolysable silane groups dispersed in the matrix phase, and
- an acidic silanol condensation catalyst (C),
wherein the polypropylene homo- or copolymer (A) further comprises a particulate acid scavenger.

2. Heterophasic polypropylene composition according to claim 1 wherein the weight ratio of homo- or copolymer (A) to polyolefin (B) is from 99:1 to 50:50.

3. Heterophasic polypropylene composition according to claim 1 or 2 wherein the particulate acid scavenger is a mineral acidic scavenger.

4. Heterophasic polypropylene composition according to any of the previous claims wherein the particulate acid scavenger is selected from a group consisting of precipitated calcium carbonate, magnesium oxide, and synthetic hydrotalcites.

5. Heterophasic polypropylene composition according to any of the previous claims wherein the particulate acid scavenger is present in an amount of 0.001 to 1.0 wt%, based on the total polypropylene homo- or copolymer (A).

6. Heterophasic polypropylene composition according to any of the previous claims wherein polyolefin (B) is an ethylene homo- or copolymer.

7. Heterophasic polypropylene composition according to any of the previous claims wherein the amount of the silane groups is from 0.1 to 10 wt%, based on the total polyolefin (B).

8. Heterophasic polypropylene composition according to any of the previous claims wherein polyolefin (B) is obtained by grafting the silane groups into the polyolefin and has a density of 900 to 960 kg/m³.

9. Heterophasic polypropylene composition according to any of the previous claims wherein polyolefin (B) is obtained by polymerisation of olefin monomers and silane group containing monomers and has a density of 900 to 940 kg/m³.

10. Heterophasic polypropylene composition according to any of the previous claims wherein the silanol condensation catalyst (C) comprises a sulfonic acid.

11. Heterophasic polypropylene composition according to any of the previous claims wherein the silanol condensation catalyst (C) comprises an organic sulfonic acid comprising 10 C-atoms or more, the sulfonic acid further comprising at least one aromatic group.

12. Heterophasic polypropylene composition according to any of the previous claims wherein the silanol condensation catalyst (C) comprises an organic sulfonic acid comprising the structural element:
Ar(SO₃H)ₓ (I)
with Ar being an aryl group which may be substituted or non-substituted and x being at least 1.

13. Heterophasic polypropylene composition according to any of the previous claims wherein the silanol condensation catalyst (C) is present in an amount of 0.0001 to 6 wt%, based on the total composition.

14. Heterophasic polypropylene composition according to any of the previous claims wherein the composition may further comprise an inorganic mineral filler.

15. Heterophasic polypropylene composition according to any of the previous claims wherein the composition has a Charpy notched impact strength at +23°C of at least 7.0 kJ/m², determined according to ISO 179 1 eA.

16. A method for producing a heterophasic polypropylene composition according to any of the previous claims
wherein the process comprises the following steps:
i. polymerising a polypropylene homo- or copolymer (A) and afterwards adding a particulate acid scavenger,
ii. blending (A) and (B), which comprises hydrolysable silane groups together with the silanol condensation catalyst (C),
iii. pelletizing of the blend of step (ii) in a water bath, and afterwards
iv. cross-linking the heterophasic polypropylene composition at 10 to 40°C under a humidity of below 85 % to a cross-linking degree of at least 30 %, based on the total polyolefin (B).

17. The method according to claim 16 wherein the particulate acid scavenger is added together with antioxidants.

18. The method according to claim 16 or 17 wherein step (ii) is carried out at a temperature of 180 to 230°C.

19. The method according to claim 16 to 18 wherein for pelletizing the residence time of the blend of step (ii) in the water bath is less than 120 seconds.

20. Use of the heterophasic polypropylene composition according to any of claims 1 to 15 for pipe, wire and cable, film, fibre or moulding application.

21. An article made of the heterophasic polypropylene composition according to any of claims 1 to 15.

## Amended claims

### Amended claims in accordance with Rule 137(2) EPC.

**1.** A heterophasic polypropylene composition comprising
- a polypropylene homo- or copolymer (A) as matrix phase,
- an ethylene homo- or copolymer (B) comprising hydrolysable silane groups dispersed in the matrix phase, and
- an acidic silanol condensation catalyst (C),
wherein the polypropylene homo- or copolymer (A) further comprises a particulate acid scavenger.

**2.** Heterophasic polypropylene composition according to claim 1 wherein the weight ratio of homo- or copolymer (A) to polyolefin (B) is from 99:1 to 50:50.

**3.** Heterophasic polypropylene composition according to claim 1 or 2 wherein the particulate acid scavenger is a mineral acidic scavenger.

**4.** Heterophasic polypropylene composition according to any of the previous claims wherein the particulate acid scavenger is selected from a group consisting of precipitated calcium carbonate, magnesium oxide, and synthetic hydrotalcites.

**5.** Heterophasic polypropylene composition according to any of the previous claims wherein the particulate acid scavenger is present in an amount of 0.001 to 1.0 wt%, based on the total polypropylene homo- or copolymer (A).

**6.** Heterophasic polypropylene composition according to any of the previous claims wherein the amount of the silane groups is from 0.1 to 10 wt%, based on the total polyolefin (B).

**7.** Heterophasic polypropylene composition according to any of the previous claims wherein polyolefin (B) is obtained by grafting the silane groups into the polyolefin and has a density of 900 to 960 kg/m³.

**8.** Heterophasic polypropylene composition according to any of the previous claims wherein polyolefin (B) is obtained by polymerisation of olefin monomers and silane group containing monomers and has a density of 900 to 940 kg/m³.

**9.** Heterophasic polypropylene composition according to any of the previous claims wherein the silanol condensation catalyst (C) comprises a sulfonic acid.

**10.** Heterophasic polypropylene composition according to any of the previous claims wherein the silanol condensation catalyst (C) comprises an organic sulfonic acid comprising 10 C-atoms or more, the sulfonic acid further comprising at least one aromatic group.

**11.** Heterophasic polypropylene composition according to any of the previous claims wherein the silanol condensation catalyst (C) comprises an organic sulfonic acid comprising the structural element:
Ar(SO₃H)ₓ (I)
with Ar being an aryl group which may be substituted or non-substituted and x being at least 1.

**12.** Heterophasic polypropylene composition according to any of the previous claims wherein the silanol condensation catalyst (C) is present in an amount of 0.0001 to 6 wt%, based on the total composition.

**13.** Heterophasic polypropylene composition according to any of the previous claims wherein the composition may further comprise an inorganic mineral filler.

**14.** Heterophasic polypropylene composition according to any of the previous claims wherein the composition has a Charpy notched impact strength at +23°C of at least 7.0 kJ/m², determined according to ISO 179 1eA.

**15.** A method for producing a heterophasic polypropylene composition according to any of the previous claims
wherein the process comprises the following steps:
i. polymerising a polypropylene homo- or copolymer (A) and afterwards adding a particulate acid scavenger,
ii. blending (A) and (B), which comprises hydrolysable silane groups together with the silanol condensation catalyst (C),
iii. pelletizing of the blend of step (ii) in a water bath, and afterwards
iv. cross-linking the heterophasic polypropylene composition at 10 to 40°C under a humidity of below 85 % to a cross-linking degree of at least 30 %, based on the total polyolefin (B).

**16.** The method according to claim 15 wherein the particulate acid scavenger is added together with antioxidants.

**17.** The method according to claim 15 or 16 wherein step (ii) is carried out at a temperature of 180 to 230°C.

**18.** The method according to claim 15 to 17 wherein for pelletizing the residence time of the blend of step (ii) in the water bath is less than 120 seconds.

**19.** Use of the heterophasic polypropylene composition according to any of claims 1 to 14 for pipe, wire and cable, film, fibre or moulding application.

**20.** An article made of the heterophasic polypropylene composition according to any of claims 1 to 14.
